# EUROPEAN PATENT APPLICATION

(11) **EP 2 561 924 A1**
(43) Date of publication of application: **27.02.2013**
(21) Application number: 11771849.4
(22) Date of filing: 31.03.2011
(51) Int. Cl.: B01F 5/02, B01F 3/04, B01F 5/20, B05B 1/34, B08B 9/02, C02F 1/74

(54) **MIXED-FLOW NOZZLE**

(30) Priority: 22.04.2010 JP 2010098586
(71) Applicant: Nagaoka International Corporation, Osaka 595-0055 (JP)
(72) Inventor: MIMURA, Hitoshi, Izumiotsu-shi Osaka 595-0055 (JP); MUKAI, Kiyokazu, Izumiotsu-shi Osaka 595-0055 (JP)
(74) Representative: Müller Schupfner & Partner
(86) International application number: PCT/JP2011/058188
(87) International publication number: WO 2011/132512

(57) **Abstract**

A mixed stream nozzle which can prevent accumulation and solidifying of oxides on an inner wall of a raw-water-air mixed stream nozzle of a water treatment apparatus with a simple device is provided. In a mixed stream nozzle having, at one end thereof, a water supply tube connecting portion (2), an air inlet (3) formed on the downstream side of the water supply tube connecting portion, and a mixed stream outlet (4) provided at the other end of the mixed stream nozzle from which mixed stream of water and air is jetted out, nozzle inner wall cleaning means is provided which is made of a twisted-ring chain (11) which is fixed to an inner wall of the nozzle on the downstream side of the air inlet (3) and extends to the vicinity of the mixed stream outlet (4) for colliding with the mixed stream and moving continuously in the nozzle in a manner to swivel by force received from the mixed stream and thereby contacting the inner wall of the nozzle.

## Description

### Technical Field

This invention relates to a mixed stream nozzle for a water treatment apparatus and, more particularly, to a mixed stream nozzle for supplying a mixed stream of raw water and air used for a water treatment apparatus which removes iron, manganese and other soluble elements dissolved in raw water such as underground water by oxidizing and insolubilizing these components without using chemicals such as an oxidizing agent and a coagulant.

### Background art

As a water treatment apparatus removing iron, manganese and other elements dissolved in raw water such as underground water by oxidizing and insolubilizing these elements with a simple and compact apparatus without using chemicals such as an oxidizing agent and a coagulant, a water treatment apparatus disclosed in Japanese Patent Application Laid-open Publication No. 2002-126768 has been proposed. This water treatment apparatus comprises a mixed stream jet nozzle which is connected at one end thereof to a raw water supply tube for supplying raw water, has an air inlet such as an air inlet tube on the downstream side of the raw water supply connecting portion, and has at the other end thereof a mixed stream outlet for jetting out mixed stream of raw water supplied from the raw water supply tube and air introduced from the air inlet. The mixed stream including multitudes of air bubbles is blown out of the mixed stream outlet and is struck against the water surface above the filter layer disposed below the mixed stream outlet thereby causing vehement aeration both in the water surface above the filter layer and on the surface of the filter layer.

By this aeration, soluble substances such as iron and manganese contained in the water are oxidized and thereby are turned to insoluble substances and are caught on the surfaces of particles of the filter material such as filtering sand which constitutes the filter layer either by precipitation or forming flocks. Accordingly, dissolved substances such as iron and manganese in raw water can be turned to insoluble substances and filtered out with a simple and compact apparatus without necessity for using an oxidizing agent or the like.

Describing the function of the mixed stream nozzle more specifically, raw water which has passed this mixed stream nozzle is mixed with air introduced from the air inlet and dissolved oxygen is saturated. Soluble iron monoxide ion in raw water is oxidized by the dissolved oxygen and, as a result, an iron hydroxide ion fil is formed on surfaces of the filtering sand. This film acts as a catalyst and accelerates oxidation of the soluble iron monoxide ion and resulting forming of iron (II) hydroxide thereby enhances removal of iron. This iron (II) hydroxide also is deposited on the filtering sand.

### Summary of the Invention

### Problem to be solved by the Invention

There is a problem peculiar to this mixed stream nozzle. That is, iron oxide and other oxides are deposited and solidified on the inner wall of the mixed stream nozzle. More specifically, dissolved oxygen in air which is introduced into raw water from the air inlet of the mixed stream nozzle not only forms iron (II) hydroxide on the filter layer but also oxidizes soluble iron monoxide ion in raw water passing through the mixed stream nozzle and forms iron hydroxide ion film on the inner wall of the mixed stream nozzle. This film acts as a catalyst and causes iron (II) hydroxide to be formed.

Since, in this case, the nozzle tube of the mixed stream nozzle is made of stainless steel, the inner wall of the nozzle is not rusted. However, iron (II) hydroxide and other oxides accumulate rapidly on the inner wall of the mixed stream nozzle on the downstream side of the air inlet and this deposit is solidified to form a thick layer and, as a result, blocking of the mixed stream nozzle takes place. Accordingly, in this water treatment apparatus, it becomes necessary to detach the mixed stream nozzle periodically, e.g., every several months, and scrape off the deposit of the hydroxide and oxides by drilling. In case the deposit is seriously high, the inside of the mixed stream nozzle must be rinsed with hydrochloric acid or the like. Water treatment work by the water treatment apparatus must be suspended during this period of deposit removing work resulting in adverse effect on the work efficiency.

The present invention has been made in view of the above described problem in the prior art water treatment apparatus. It is an object of the present invention to provide a mixed stream nozzle which can prevent accumulation and solidifying of iron hydroxide and other oxides on an inner wall of a raw water - air mixed stream nozzle with a simple device and without requiring frequent deposit removing operations.

### Means for Solving the Problem

Repeated studies and experiments by the inventors of the present invention for solving the above described problem have resulted in the finding, which has led to the present invention, that, by utilizing strength of energy of jet stream flowing through the mixed stream nozzle and providing a member which will collide with the mixed stream on the downstream side of an air inlet of the mixed stream nozzle and move by force received from the mixed stream and thereby contact the inner wall of the nozzle, the inner wall of the mixed stream nozzle can be cleaned automatically without requiring any input or power applied from outside.

For achieving the object of the invention, in the first aspect of the invention, there is provided a mixed stream nozzle comprising, at one end thereof, a water supply tube connecting portion which is connected to a water supply tube, an air inlet formed on the downstream side of the water supply tube connecting portion, and a mixed stream outlet provided at the other end of the mixed stream nozzle from which mixed stream of water and air is jetted out characterized in that said mixed stream nozzle further comprises nozzle inner wall cleaning means made of a member which is fixed to an inner wall of the nozzle on the downstream side of the air inlet and extends to the vicinity of the mixed stream outlet for colliding with the mixed stream and moving continuously in the nozzle in a manner to swivel by force received from the mixed stream and thereby contacting the inner wall of the nozzle.

In the second aspect of the invention, the nozzle inner wall cleaning means is a twisted-ring chain.

In the third aspect of the invention, the twisted-ring chain is fixed to diametrically opposite positions of the inner wall of the nozzle by means of a pin inserted through the upper end portion of the twisted-ring chain and suspends from a radially central position of the nozzle.

In the fourth aspect of the invention, a pair of the pin are provided in the longitudinal direction of the nozzle.

In the fifth aspect of the invention, the nozzle inner wall cleaning means comprises a plurality of wires which are attached to a swivel.

In the sixth aspect of the invention, the diameter of the inner wall of the nozzle is larger in a downstream side than in an upstream side and the diameter increases gradually in an intermediate portion from a small diameter portion on the upstream side to a large diameter portion on the downstream side.

### Advantageous Results of the Invention

According to the first aspect of the invention, by providing the nozzle inner wall cleaning means made of a member which is fixed to an inner wall of the nozzle on the downstream side of the air inlet and extends to the vicinity of the mixed steam outlet for colliding with the mixed stream and moving continuously in the nozzle in a manner to swivel by force received from the mixed stream and thereby contacting the inner wall of the nozzle, cleaning of the inner wall of the mixed stream nozzle can be performed automatically without requiring any input or power applied from outside and, as a result, accumulation and solidifying of iron (II) hydroxide and other oxides on the inner wall on the downstream side of the air inlet of the mixed stream nozzle can be prevented and the work which has been performed frequently in the past for detaching the mixed stream nozzle and removing the oxides can be eliminated whereby the work efficiency of the water treatment apparatus can be significantly improved.

According to the second aspect of the invention, by constructing the nozzle inner wall cleaning means with a twisted-ring chain, a commercially available, inexpensive twisted-ring chain can be used and the object of the invention thereby can be achieved efficiently with a simple device.

According to the third aspect of the invention, since the twisted-ring chain is fixed to diametrically opposite positions of the inner wall of the nozzle by means of a pin inserted through the upper end portion of the twisted-ring chain and suspends from a radially central position of the nozzle, the twisted-ring chain can be fixed to the tube wall with a simple member and can be supported in the central portion of the nozzle whereby smooth movement of the twisted-ring chain can be achieved.

According to the fourth aspect of the invention, a pair of the pin are provided in the longitudinal direction of the nozzle whereby even if the upper side pin which contacts the twisted-ring chain directly owing to friction with the moving twisted-ring chain is cut off due to wear, the twisted-ring chain can be supported by the lower side pin and thereby can be prevented from falling.

According to the fifth aspect of the invention, by constructing the nozzle inner wall cleaning means with a plurality of wires which are attached to a swivel, these wires are swiveled to contact the inner wall of the nozzle and, accordingly, the object of the invention can be achieved with a simple device.

According to the sixth aspect of the invention, since the diameter of the inner wall of the nozzle is larger in a downstream side than in an upstream side and the diameter increases gradually in an intermediate portion from a small diameter portion on the upstream side to a large diameter portion on the downstream side, there is no step in this intermediate portion and, therefore, this intermediate portion can be cleaned with the swiveling nozzle inner wall cleaning means as uniformly as the large diameter portion on the downstream side without likelihood of occurrence of accumulation and solidifying of oxides in the intermediate portion.

### Brief Description of the Drawings

FIG. 1 is a partially sectional view showing an embodiment of the mixed stream nozzle of the present invention.
FIG. 2 is a perspective view of a twisted ring which constitutes a unit of a twisted-ring chain used for the above described embodiment.
FIG. 3 is a perspective view showing an example of a pin for fixing the twisted-ring chain used for the above embodiment.
FIG. 4 is a partially sectional view of a modified embodiment of the above embodiment.
FIG. 5 is a side view of a pin used for the modified embodiment.
FIG. 6 is a perspective view of nozzle inner wall cleaning means used in another embodiment of the invention.
FIG. 7 is a sectional view of a swivel used in the nozzle inner wall cleaning means shown in FIG. 6.

### Description of Embodiments of the Invention

Description will now be made about preferred embodiments of the present invention with reference to the accompanying drawings.

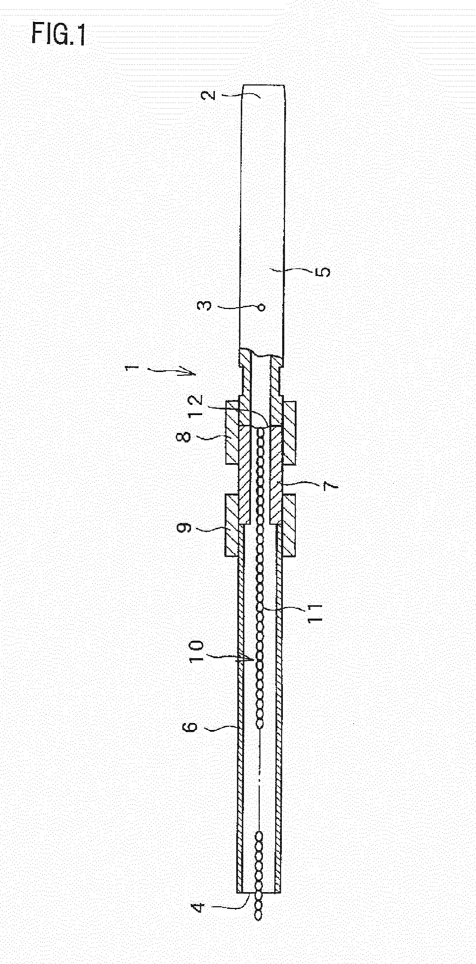

FIG. 1 is a partially sectional view of a preferred embodiment of the mixed stream nozzle of the invention. The mixed stream nozzle of the invention can be applied not only to a water treatment apparatus for filtering underground water but also to various types of water treatment apparatuses. Description of the present embodiment however will be made about a case where the invention is applied to a water treatment apparatus as disclosed in the above described Japanese Patent Application Laid-open Publication No. 2002-126768 which is used for filtering out iron, manganese etc. from underground water.

Referring to FIG. 1, a mixed stream nozzle 1 has a water supply tube connecting portion 2 in an end portion of the nozzle 1 which is an upper end portion in use. The water supply tube connecting portion 2 is connected to a water supply tube (not shown). An air inlet 3 is formed on the downstream side of the water tube connecting portion 2 for introducing air into the nozzle from outside.

A mixed stream outlet 4 is provided at the other end of the nozzle 1 which is a lower end portion in use for jetting out mixed stream of raw water (underground water) supplied from the water tube connecting portion 2 and air introduced from the air inlet 3. The diameter of the inner wall of the mixed stream nozzle 1 is larger in a tube portion 6 on the downstream side than in a tube portion 5 on the upstream side. A joint portion 7 having the same inner diameter as the tube portion 5 is provided between the small diameter tube portion 5 and the large diameter tube portion 6. The outer wall of the joint portion 7 is threaded and the joint portion 7 is connected to the tube portions 5 and 6 by means of annular couplings 8 and 9 which are threaded in their inner walls.

In the mixed stream nozzle 1, nozzle inner wall cleaning means 10 which is fixed to an inner wall of the nozzle 1 on the downstream side of the air inlet 3 and extends to the vicinity of the mixed steam outlet 4 for colliding with the mixed stream and moving continuously in the nozzle 1 in a manner to swivel by force received from the mixed stream and thereby contacting the inner wall of the nozzle 1 is made of a twisted-ring chain 11 in the present embodiment.

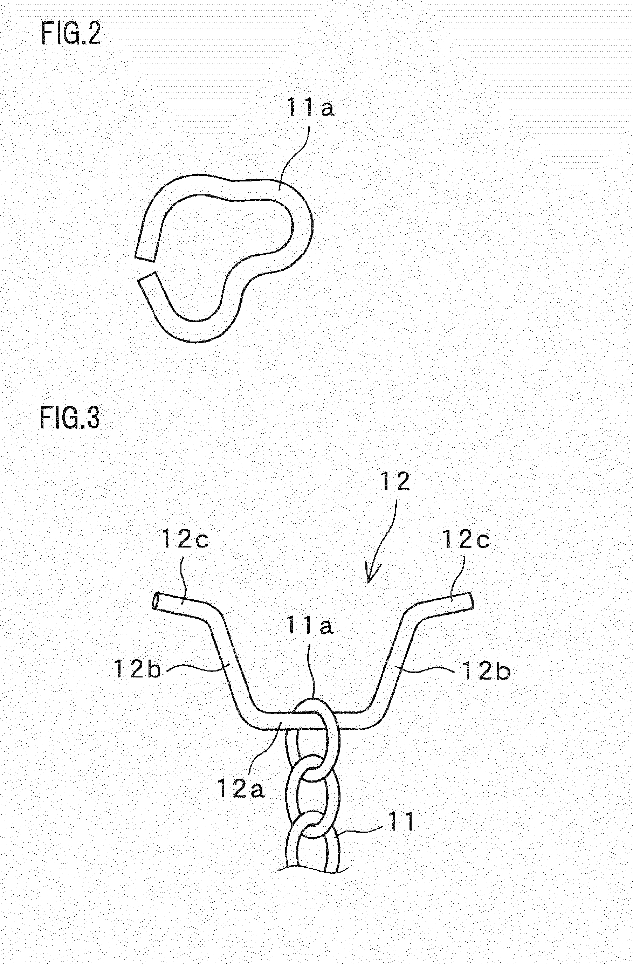

A twisted ring 11a shown in the perspective view of FIG. 2 is used as a unit constituting the twisted-ring chain 11. The twisted ring 11a is an oval ring which is deformed by partly twisting it. The twisted-ring chain 11 is made of a plurality of the twisted rings 11a connected in series. As this twisted-ring chain 11, a commercially available twisted-ring chain made of steel or other metal may be used. The twisted-ring chain 11 may be made of a material other than metal, e.g., hard plastic and may also be a twisted-ring chain which is of a configuration other than the one shown in FIG. 2.

As a result of numerous experiments, it has been found that the twisted-ring chain is very effective for achieving the object of the invention because the twisted-ring chain can perform swiveling motion continuously and that a normal flat chain which uses a flat oval ring or a circular ring as a unit constituting the chain is not suitable for achieving the object of the invention because the mixed stream does not collide with a flat chain but falls perpendicularly along the flat chain without causing swiveling motion of the flat chain.

A pin 12 of a shape as shown in the perspective view of FIG. 3 is inserted through a ring 11a at an end portion of the twisted-ring chain 11 (an upper end portion when the twisted-ring chain 11 is used). This pin 12 is made of a spring having a chain supporting portion 12a in the form of a straight bar supporting the twisted-ring chain 11, rising portions 12b which rise from end portions of the chain supporting portion 12a, and fixing portions 12c in the form of short straight bars which are bent from tip end portions of the rise portions 12b and extend substantially in parallel with the chain supporting portion 12a, the supporting portion 12a, the rising portions 12b and the fixing portions 12c being formed integrally. The spring may be made of metal or other material such as hard plastic.

The pin 12 is inserted through the twisted-ring chain 11 and the fixing portions 12c, 12c of the pin 12 are inserted in gaps between the tube portion 5 and the joint portion 7 of FIG. 1. By tightening the coupling 8, the twisted-ring chain 11 is fixed to the diametrically opposite positions of the inner wall of the nozzle 1. In state of use of the mixed stream nozzle 1 in which the nozzle 1 is connected to the water supply tube, the twisted-ring chain 11 is suspended from the radially central position of the nozzle 1 directly below.

If the lower end of the twisted-ring chain 11 reaches in the vicinity of the mixed stream outlet 4, accumulation and solidifying of oxides will be mostly prevented even in a case where the lower end of the twisted-ring chain 11 is located slightly above (i.e., upstream side) the lower end of the mixed stream outlet 4. By positioning the twisted-ring chain 11 so that the lower end of the twisted-ring chain 11 projects outwardly from the lower end of the mixed stream outlet 4 as shown in FIG. 1, accumulation of oxides can be prevented completely and, therefore, this positioning of the twisted-ring chain 11 is most preferable.

Description will now be made about operation of the twisted-ring chain constituting the nozzle inner wall cleaning means.

In the state of use of the mixed stream nozzle 1, raw water supplied from the water supply tube connecting portion 2 and air introduced from the air inlet 3 are mixed together in the joint portion from the air inlet 3 to the vicinity of the fixing portions of the pin 12 and this mixed stream flows down the tube portion 6 as a jet stream containing abundant dissolved oxygen. The mixed stream collides with each of the twisted-rings 11a constituting the twisted-ring chain 11 and thereby moves the twisted-rings 11a by the force of the mixed stream in lateral or slantwise direction. As a result, the twisted-ring chain 11 as a whole is moved in a manner to swivel in one direction (either clockwise or counter clockwise direction). As a result of an experiment in which a transparent vinyl chloride tube is used so that movement in the tube can be visually observed, it has been surprisingly found that this movement of the twisted-ring chain 11 is not a swiveling movement of the foremost end portion (lower end portion) of the chain but a swiveling movement of the chain 11 in its substantially entire length except for a portion in the vicinity of the pin 12. Accordingly, the twisted-ring chain 11 contacts the inner wall of the nozzle in a manner to scrub the inner wall in its substantially entire length of the inner wall where accumulation and solidifying of oxides tend to take place and thereby prevents accumulation of oxides on the inner wall.

As a result, accumulation and solidifying of oxides on the inner wall of the nozzle can be prevented as long as the mixed jet stream continues to flow.

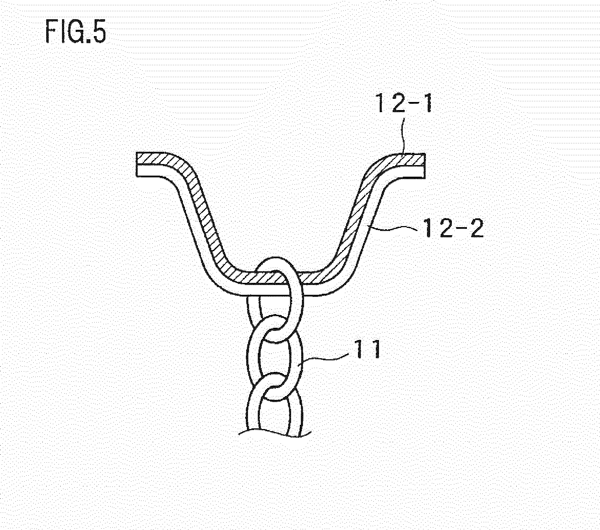

In the above described embodiment, a single pin 12 is used for fixing the twisted-ring chain 11 to the inner wall. As a modified example, as shown in FIG. 5, a pair of pins each of which is of the same type of pin as the one shown in FIG. 3 may be used for fixing the twisted-ring chain 11 to the inner wall. In this case, since the twisted-ring chain 11 is suspended while contacting an upper side pin 12-1, the upper side pin 12-1 which is in direct contact with the twisted-ring chain 11 may be cut off due to wear caused by friction with the moving twisted-ring chain 11. Even if the upper side pin 12-1 is cut off, the chain is held by the lower side pin 12-2 and thereby is prevented from falling. Such cutting off of the upper side pin 12-1 may also be prevented if maintenance is performed so that the upper side pin 12-1 is exchanged periodically.

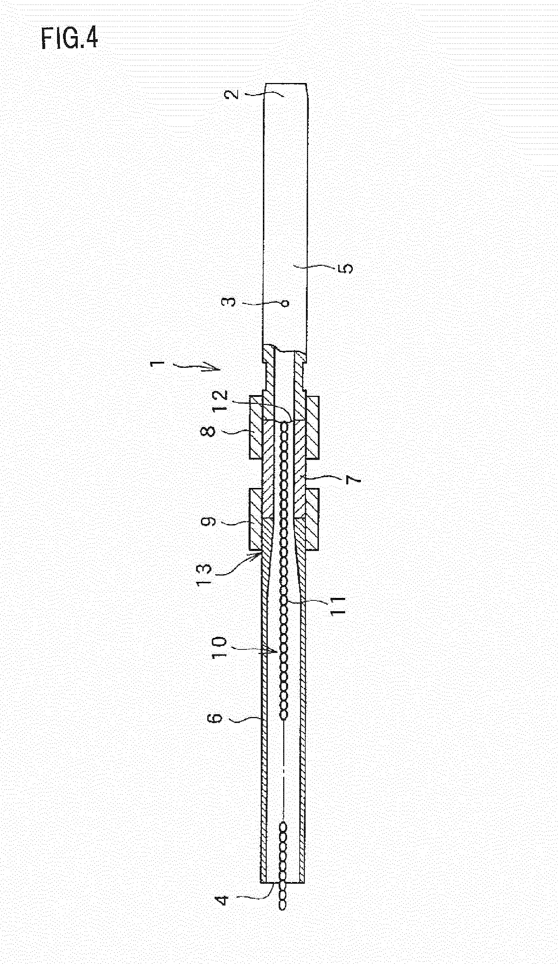

FIG. 4 is a partly sectional view showing a modified embodiment of the above described embodiment. In FIG. 4, the same components as those shown in FIG. 1 are designated by the same reference characters and description thereof will be omitted.

As described above, the diameter of the inner wall of the mixed stream nozzle 1 is larger in the downstream side tube portion 6 than in the upstream side tube portion 5 and the joint portion 7. In the modified embodiment, the diameter increases gradually in an upper end portion 13 of the tube portion 6 which is an intermediate portion from the joint portion 7 which is the small diameter portion on the upstream side to the tube portion 6 which is the large diameter portion on the downstream side and there is no step in this intermediate portion 13 and, therefore, this intermediate portion 13 can be cleaned with the swiveling nozzle inner wall cleaning means as uniformly as the large diameter portion of the tube portion 6 on the downstream side without likelihood of occurrence of accumulation and solidifying of oxides in the intermediate portion 13.

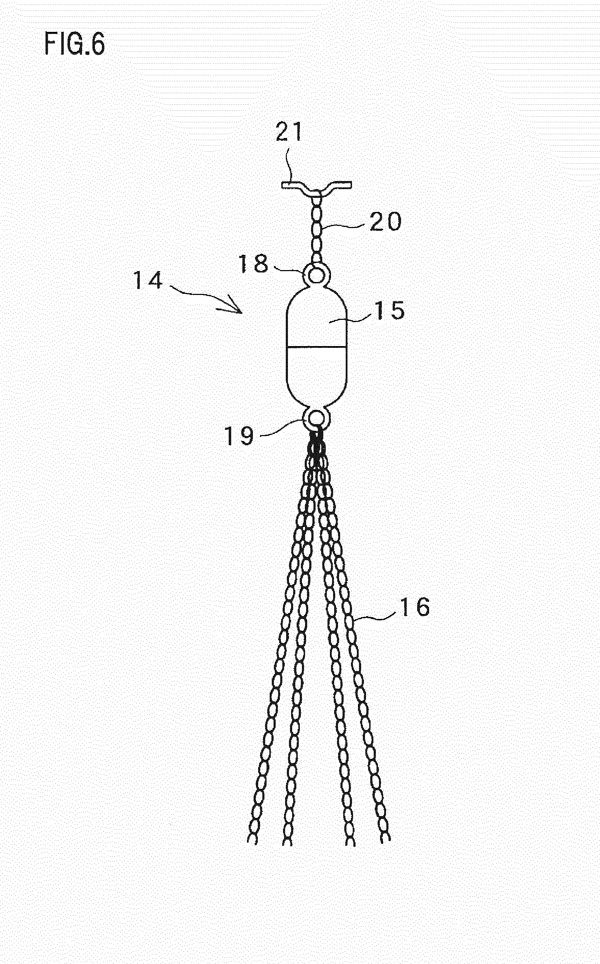

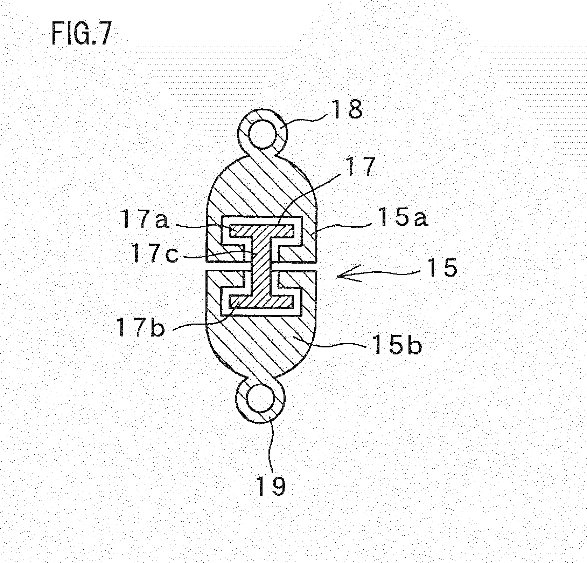

FIG. 6 is a perspective view showing nozzle inner wall cleaning means used in another embodiment of the mixed stream nozzle of the invention and FIG. 7 is a sectional view of a swivel which is used in the nozzle inner wall cleaning means shown in FIG. 6.

This nozzle inner wall cleaning means 14 comprises a plurality of wires 16 which are attached to a swivel 15. The swivel 15 comprises, as shown in FIG. 7, an upper portion 15a and a lower portion 15b which are formed by dividing an ellipsoid in the direction of the major axis. The upper portion 15a and the lower portion 15b are connected rotatably to each other by means of a connecting member 17 which is made of an upper disk 17a and a lower disk 17b which are respectively housed loosely in hollow portions of the upper portion 15a and the lower portion 15b and are connected by a connection rod 17c. A pin 21 which is of a configuration similar to the pin 12 shown in FIG. 3 is connected via a chain 20 to a connecting ring 18 provided at the upper end of the upper portion 15a. The pin 21 is fixed at both end portions thereof to the inner wall of the mixed stream nozzle 1 in a manner similar to the fixing manner of the pin 12 shown in FIG. 3. To a connecting ring 19 provided at the lower end of the lower portion 15b are attached the wires 16 in a manner to expand radiately.

The operation of this nozzle inner wall cleaning means 14 is similar to the operation of the nozzle inner wall cleaning means 10 of the embodiment shown in FIG. 1. In the state of use of the mixed stream nozzle 1, the mixed stream flows down the tube portion 6 as a jet stream containing abundant dissolved oxygen. The mixed stream collides with each of the wires 16 constituting the nozzle inner wall cleaning means 14 and thereby moves the wires 16 by the force of the mixed stream in lateral or slantwise direction. As a result, the lower portion 15b of the swivel 15 to which the wires 16 are connected and the wires 16 as a whole are moved in a manner to swivel in one direction (either clockwise or counter clockwise direction).

As a result of an experiment it has been found that this movement is not a swiveling movement of the foremost end portion (lower end portion) of the wires 16 but a swiveling movement of the wires 16 in their major portion except for portions in the vicinity of the pin 21 and the swivel 15. Accordingly, the wires 16 contact the inner wall of the nozzle in a manner to scrub the inner wall in its substantially entire length of the inner wall where accumulation and solidifying of oxides tend to take place and thereby prevent accumulation of oxides on the inner wall. As a result, accumulation and solidifying of oxides on the inner wall of the nozzle can be prevented as long as the mixed jet stream continues to flow.

Description has been made above as to the embodiment in which the twisted-ring chain is used and the embodiment in which the radiating wires are used as the nozzle inner wall cleaning means. The nozzle inner wall cleaning means however is not limited to these embodiments but any member may be used regardless of its configuration and material so long as the member is fixed to an inner wall of the nozzle on the downstream side of the air inlet and extends to the vicinity of the mixed steam outlet for colliding with the mixed stream and moving continuously in the nozzle in a manner to swivel by force received from the mixed stream and thereby contacting the inner wall of the nozzle.

### Example

A mixed stream jet nozzle of the shape shown in FIG. 1 was used. The nozzle had the entire length of 803mm, tube outer diameter of 34mm, length of a flow portion from the end of the water supply tube connecting portion 2 to the air inlet 3 being 173mm, length of a flow portion from the air inlet 3 to the terminating end of the tube portion 5 being 150mm, length of the tube portion 6 being 480mm, inner diameter of the small diameter portion being 16mm, and inner diameter of the large diameter portion being 26mm.

All of the tube portions 5 and 6 and the joint portion 7 were made of stainless steel tubes. As the nozzle inner wall cleaning means, a commercially available twisted-ring chain was used. As the unit twisted ring of the twisted-ring chain, a ring made of a steel wire having diameter of 1mm, having the major axis of the ring of 5.5mm and the minor axis of the ring of 4.5mm was used. This chain was passed through the pin in such a manner that the chain is exposed to the outside by about 10mm from the mixed stream outlet 4. As a contrast, a mixed stream nozzle which had the same shape and size as the above described nozzle of the example but had no nozzle inner wall cleaning means, that is, a prior art mixed stream nozzle, was used.

Underground water was caused to flow through the mixed stream nozzle of the example of the invention and the mixed stream nozzle of the contrast at a flow speed of 10 - 35m/second and state of accumulation and solidifying of oxides in the two nozzles was observed. As a result, in the contrast nozzle, blocking of the nozzle occurred due to accumulation and solidifying of oxides and water flowed out of the air inlet after 55 days. In the nozzle of the example, no substantial accumulation of oxides was observed during the same period of time. Upon lapse of 3 months, the experiment was finished and, even at this point, accumulation of oxides on the inner wall was not substantially observed. A small amount of deposit which occurred on the inner wall was not a solidified substance but a soft clayish substance which could be easily washed away by water.

In the example nozzle of the present invention, amount of dissolved oxygen in the mixed stream was not different from that in the contrast nozzle and this amount did not differ between the time of start and time of finish of the experiment. This means that attaching of the nozzle inner wall cleaning means in the nozzle does not influence the amount of dissolved oxygen in any way.

### Description of Reference Characters

- 1: mixed stream nozzle
- 2: water supply tube connecting portion
- 3: air inlet
- 4: mixed stream outlet
- 10, 14: nozzle inner wall cleaning means
- 11: twisted-ring chain
- 12: pin
- 15: swivel
- 16: wires

## Claims

1. A mixed stream nozzle comprising, at one end thereof, a water supply tube connecting portion which is connected to a water supply tube, an air inlet formed on the downstream side of the water supply tube connecting portion, and a mixed stream outlet provided at the other end of the mixed stream nozzle from which mixed stream of water and air is jetted out **characterized in that** said mixed stream nozzle further comprises nozzle inner wall cleaning means made of a member which is fixed to an inner wall of the nozzle on the downstream side of the air inlet and extends to the vicinity of the mixed stream outlet for colliding with the mixed stream and moving continuously in the nozzle in a manner to swivel by force received from the mixed stream and thereby contacting the inner wall of the nozzle.

2. A mixed stream nozzle as defined in claim 1 wherein the nozzle inner wall cleaning means is a twisted-ring chain.

3. A mixed stream nozzle as defined in claim 2 wherein the twisted-ring chain is fixed to diametrically opposite positions of the inner wall of the nozzle by means of a pin inserted through the upper end portion of the twisted-ring chain and suspends from a radially central position of the nozzle.

4. A mixed stream nozzle as defined in claim 3 wherein a pair of the pin are provided in the longitudinal direction of the nozzle.

5. A mixed stream nozzle as defined in claim 1 wherein the nozzle inner wall cleaning means comprises a plurality of wires which are attached to a swivel.

6. A mixed stream nozzle as defined in claim 1 wherein the diameter of the inner wall of the nozzle is larger in a downstream side than in an upstream side and the diameter increases gradually in an intermediate portion from a small diameter portion on the upstream side to a large diameter portion on the downstream side.
